# EUROPEAN PATENT APPLICATION

(11) **EP 0 548 625 A1**
(43) Date of publication of application: **30.06.1993**
(21) Application number: 92120666.0
(22) Date of filing: 03.12.1992
(51) Int. Cl.: G02B 23/12, G02B 23/14

(54) **Direct view and infrared imaging apparatus for a portable missile launcher**

(30) Priority: 09.12.1991 US 803823
(71) Applicant: Hughes Aircraft Company, Los Angeles, California 90080-0028 (US)
(72) Inventor: Carlson, James J., Woodland Hills, California 91367 (US); Noyes, Gary R., Los Angeles, California 90064 (US)
(74) Representative: KUHNEN, WACKER & PARTNER

(57) **Abstract**

A portable missile launcher has both a direct viewing optical system (12) and a thermal or infrared imaging system (24) for use in detecting a target (16) and aiming the launcher. The two systems (12, 24) are individually selectable for viewing via a single eyepiece (20) on manipulation of a lever (46) that positions a mirror (32) to either block the optical system while reflecting an infrared image to the eyepiece (20) or block the infrared image and allow the optical system to produce an image at the eyepiece.

## Description

### BACKGROUND OF THE INVENTION

### 1. Field of the Invention

The present invention relates generally to apparatus for viewing and displaying images of an object and, more particularly, to apparatus for selectively providing either direct viewing or display of an infrared image through a single eyepiece and especially adaptable for use with a portable missile launcher.

### 1. Description of Related Art

Present day portable missile launchers have both direct viewing capability and infrared sensing equipment which are used in aiming the missile. More particularly, direct viewing is utilized during daylight and when the target is not hidden or camouflaged. At night or when the target cannot be easily detected visually the infrared sensing equipment is employed.

Known current approaches to using both visual and infrared imaging apparatus in a portable missile launcher, utilize two separate systems with separate eyepieces and which have been found to require periodic in-field adjustments, and are inconvenient and time consuming during use in requiring the user to shift positions between the two systems and eyepieces. It would, accordingly, be highly advantageous for the user of a portable missile launcher to be able to have a single eyepiece not requiring accurate manipulative alignment between the two sets of apparatus or frequent adjustments, and, as well, eliminating the need for operator position shifting between two eyepieces.

### SUMMARY OF THE DISCLOSURE

Broadly, the invention relates to an object detection and identification system for use in a missile launcher which has direct viewing apparatus as well as infrared imaging apparatus with a single shared eyepiece.

The visual or direct viewing optical system is of conventional design including an objective lens, intermediate optics and an eyepiece, the operation of which is well known to those skilled in the optics art. The infrared image sensing apparatus is mounted on a common base or platform with the direct viewing optical system and develops an object image display on a cathode ray tube (CRT). The displayed image is acted upon by an auxiliary relay lens system to locate the display image at the same location as the visual object image. A mirror mounted on the common base is adjustable from a first position which blocks all transmission of the thermal display image into the visual optical system to a second position angular to the optical axis of the visual system for reflecting the thermal image into the eyepiece and blocking the visual image.

The two systems are so configured optically as to produce further images at the eye via the eyepiece of either the visual or thermal images at substantially the same position and of the same relative size in order to avoid confusion.

In use, on positioning the mirror to the first position, only the visual image through the telescope optics is provided to the eyepiece while on switching or rotating the mirror to the second position this blocks out the visual image to the eyepiece and simultaneously substitutes the thermal image in the same location.

### DESCRIPTION OF THE DRAWING

In the accompanying drawing:
FIG. 1 is a schematic view of the various parts of the apparatus of the present invention; and
FIG. 2 is a side elevational view of the viewing apparatus of the invention for use with a portable missile launcher.

### DESCRIPTION OF A PREFERRED EMBODIMENT

Reference is now made to the drawing for the ensuing description of the details of the present invention. As will be described more specifically, the present invention enumerated as 10, in its broadest comprehension includes a combination of a visual optical system and an infrared imaging system which are mounted on a common base for use with a portable missile launcher as to enable optional viewing of either visual or infrared images of a scene through the same eyepiece.

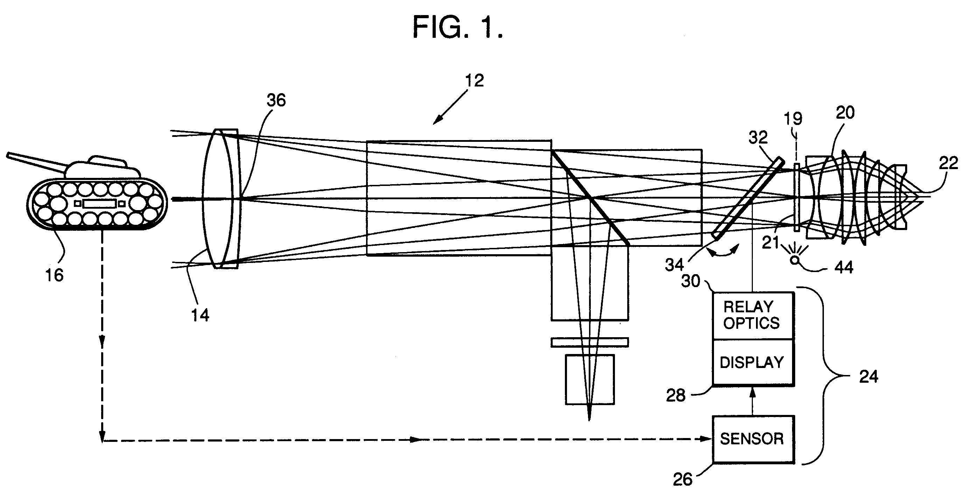

With particular reference to FIG. 1, the visual system for the present invention is enumerated generally as 12 and is seen to include a conventional telescope arrangement in which there is an objective lens 14 for receiving light information from an object 16 which is then passed through what is sometimes referred to as a Porro prism assembly 18. A Porro prism is a well-known device consisting of two right-angle prisms arranged at right angles to each other to invert and revert images. Detailed aspects of a Porro prism can be found at page 13-26 of Military Standardization Handbook, OPTICAL DESIGN, MIL-HDBK-141, October 5, 1962. An object image is formed at the focal plane 19 of a conventional eyepiece 20 where a glass reticle 21 is located. The reticle imposes a gridwork upon the viewing area. The eyepiece then recollimates the light and forms an exit pupil 22 where the eye is located to view the magnified object (target). Since the object or target 16 being viewed is typically located at some distance, the optical elements are chosen to form a telescope of predetermined magnification. As will be more particularly described, the entire visual system 12 is fixedly mounted on a base 23.

The thermal or infrared imaging system identified generally as 24 receives light energy from the target or object 16 which is sensed by sensors 26 substantially solely responsive to light energy in the infrared or near infrared range and an image is formed. A thermal or infrared imaging system suitable for use here is made available by Texas Instruments, Inc. under the trade designation ANTAS-4. A display image 28 of the thermal or infrared image received is then generated optionally on either a CRT or a vacuum fluorescent display (VFD),not shown, which also serves as an object for auxiliary relay optics 30. A mirror 32 is mounted for pivoting motion about an axis 34 from a first position in which it is completely out of the path of any radiation passing from the objective lens 14 to the eyepiece 20 of the visual system, to a second position extending across the optical axis 36 of the visual system. In the second position, the mirror is located at substantially 45° to the optical axis 36 of the auxiliary relay optics 30 which reflects the thermal display image 28 directly into the eyepiece 20 while simultaneously blocking passage of the visual radiation making its way from objective lens 14.

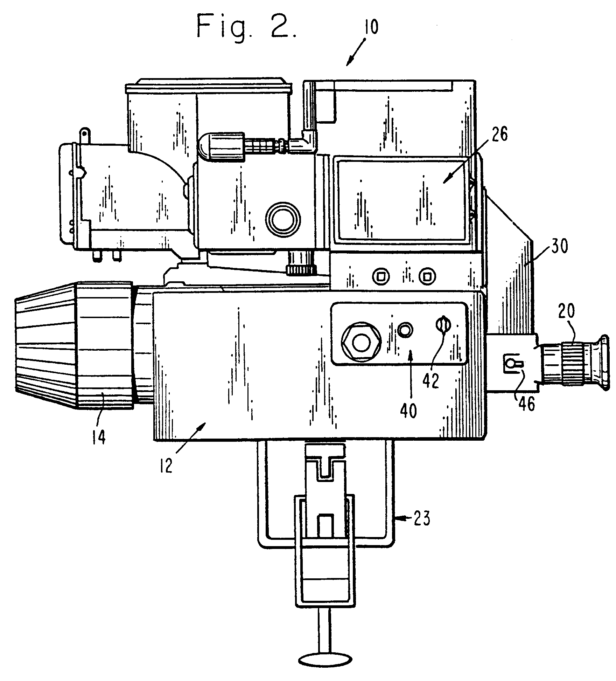

The visual system 12 and the thermal imaging system 24 are both mounted on the common base 23 (FIG. 2) and coact to selectively provide either a visual or thermal view of the target object 16. The viewing may be rapidly switched so as to enable the operator to more completely and accurately locate and identify the target object. Moreover, since both systems are set up to precisely locate the visual and thermal images at the eyepiece focal plane 19, there is little or no ambiguity between the different views. Still further, since the operator does not have to shift positions between two eyepieces, this is especially advantageous.

FIG. 2 depicts in side elevational view an assembled apparatus 10 for practicing the present invention to accomplish target sighting for a portable missile launcher. The common base 23, which can also include a carrying handle, has the visual system 12 mounted directly thereon with the object lens 14 at the forward end and the eyepiece 20 at what will be the rear end. The infrared sensor 26 and associated display equipment are mounted on (above) the visual system 12. Auxiliary missile launch controls 40 are conveniently mounted adjacent the eyepiece 20. Hand switch 42 controls the reticle light 44 and lever 46 controls positioning of the mirror 32.

Although the present invention has been described in connection with a preferred embodiment, it is to be understood that those skilled in the appertaining optical arts may suggest modifications that are within the spirit of the invention and come within the ambit of the appended claims.

## Claims

1. Apparatus for selectively providing direct view and infrared imaging for a portable missile launcher, comprising:
telescope means including an objective lens and an eyepiece arranged spaced apart along an optical axis for visually viewing an object;
thermal radiation sensing means directed to receive thermal radiation from the object and produce a visible display thereof;
relay optics for transmitting the thermal radiation display to the eyepiece;
mirror means rotatable from a first position blocking transmission of light along the telescope means optical axis to the eyepiece while reflecting light received from the relay optics to the eyepiece to a second position allowing light to freely pass along the telescope means optical axis to the eyepiece while obstructing light coming from the relay optics to the eyepiece; and
base means for unitarily relating said telescope means, said thermal radiation sensing means, said relay optics and said mirror means.

2. Apparatus as in claim 1, in which the telescope means objective lens and relay optics are arranged to provide respective images at the eyepiece focal plane.

3. Portable missile launcher target viewing and sensing apparatus, comprising:
base means;
telescope means mounted on said base means for visual examination of the target;
infrared sensing means mounted on said base means for obtaining an infrared image of the target;
means for converting the infrared image into a visible image;
relay optics for transmitting the visible image of the infrared image to a focal plane common with that of the telescope means;
a common eyepiece for viewing the visual image from the telescope means or the visible image of the infrared image at the common focal plane; and
hand operated means for selecting either the visual image from the telescope means or the visible image of the infrared image for viewing by the eyepiece.

4. Portable missile launcher target viewing and sensing apparatus as in claim 3, in which the hand operated means includes a mirror mounted for rotation to either block the visual image from the common focal plane while reflecting the visible image of the infrared image onto said common focal plane, or to block the visible image of the infrared image from the focal plane while not obstructing the visual image.
